# FASCICULE DE BREVET EUROPEEN

(11) **EP 3 906 374 B1**
(45) Date de publication et mention de la délivrance du brevet: **14.12.2022**
(21) Numéro de dépôt: 19839366.2
(22) Date de dépôt: 09.12.2019
(51) Int. Cl.: B66C 1/68, B66C 23/44, F16L 1/036, F16L 1/06, F16L 1/09, F16L 1/10, F16L 1/11, B25B 27/16, B66C 1/02

(54) **APPAREIL DE POSE DE TUYAUX DE CANALISATION**
VORRICHTUNG ZUM VERLEGEN VON HAUPTLEITUNGEN
DEVICE FOR LAYING MAINS PIPES

(30) Priorité: 03.01.2019 FR 1900037
(43) Date de publication de la demande: 10.11.2021
(73) Titulaire: Acimex, 37550 Saint Avertin (FR)
(72) Inventeur: RENARD, Pascal, 77600 Bussy Saint Georges (FR); DHENNE, Julien, 37210 Vernou sur Brenne (FR)
(74) Mandataire: Cabinet HERRBURGER
(86) Numéro de dépôt international: PCT/FR2019/052959
(87) Numéro de publication internationale: WO 2020/141266

(56) Documents cités:
- EP-A2- 1 679 462
- DE-U1-202008 015 603
- FR-A1- 2 932 240

## Description

### DOMAINE DE L'INVENTION

La présente invention a pour objet un appareil de pose de tuyaux de canalisation qui peut être relié à la flèche d'un engin de transport et portant le tuyau à poser pour l'emmancher dans un tuyau posé, comprenant :
une tête d'accrochage formée d'une articulation de pivotement d'axe vertical et d'une articulation de basculement d'axe horizontal,
un rail de guidage ayant
un appui pour se positionner et se fixer sur l'extrémité du tuyau posé et aligner le tuyau à poser sur le tuyau posé,
un chariot formé d'un tube télescopique emmanché sur le rail de guidage et actionné par rapport à celui-ci et muni d'un appui portant le tuyau à positionner et à emmancher dans la doucine du tuyau posé.

### ETAT DE LA TECHNIQUE

Selon le document FR 2 932 240, il est connu de poser des tuyaux de canalisation à l'aide d'un appareil de pose 1 installé sur le bras articulé 2 d'un engin de levage 3 par l'intermédiaire d'un cardan 4 permettant de basculer l'appareil par rapport au bras selon un axe de basculement horizontal et d'une couronne d'orientation reliée à une poutre télescopique. Cette couronne d'orientation permet de pivoter l'appareil autour d'un axe, en général vertical.

La poutre télescopique est composée d'une partie fixe 5 munie d'une ventouse 7, fixée à la couronne d'orientation 4' et d'une partie mobile 6 portant également une ventouse 8. La partie fixe 5 prend appui et se fixe sur le tuyau posé pour permettre de positionner et de tirer la partie mobile 6 et emmancher le tuyau qu'elle porte.

La manipulation du tuyau à poser est difficile et déséquilibrée car le tuyau est situé pratiquement complètement d'un côté de la couronne d'orientation et du cardan qui doivent absorber un déséquilibre important.

Ce déséquilibre total subsiste même lorsque la partie fixe 5 est posée et solidarisée au tuyau déjà posé par sa ventouse 7 ; on risque même de soulever ou de déranger le tuyau déjà mis en place.

Indépendamment de cette question importante de déséquilibre qui nécessite un surdimensionnement des composants de l'appareil se traduisant par un poids et un coût important, l'appareil ne permet pas de se positionner de façon précise par rapport au tuyau posé et de connaître de manière précise les conditions d'engagement de l'extrémité du nouveau tuyau.

En résumé, l'opération de pose est difficile et imprécise, ce qui est gênant pour la qualité du résultat. Les composants de l'appareil doivent être dimensionnés de façon importante pour tenir compte du déséquilibre du tuyau à poser, déséquilibre d'autant plus important que ce tuyau est long.

Il en résulte un poids important pour le matériel et un coût important induit par ce surdimensionnement indispensable.

### BUT DE L'INVENTION

La présente invention a pour but de développer un appareil de pose de tuyaux de canalisation permettant un positionnement précis de l'appareil et du tuyau à poser par rapport au tuyau déjà posé sans déranger le tuyau ni surdimensionner l'équipement, en équilibrant les parties de l'appareil par rapport à son accrochage à l'extrémité du bras articulé de l'engin qui le porte.

### EXPOSE ET AVANTAGES DE L'INVENTION

A cet effet, l'invention a pour objet un appareil de pose de tuyaux de canalisation selon la revendication 1. Selon l'invention le rail de guidage est relié à la tête d'accrochage à travers le tube télescopique. L'appareil de pose selon l'invention a l'avantage de tenir l'ensemble télescopique formé par le rail de guidage et le tube télescopique emmanché sur le rail de guidage, sensiblement près du centre de gravité de cet ensemble portant le tuyau à poser. Cette disposition offre de multiples avantages de réalisation et de manœuvre de l'appareil pour l'approche, l'alignement et la mise en place du tuyau à poser.

En effet, cette fixation relativement équilibrée, possible puisque les tuyaux ont en général une longueur identique, simplifie la réalisation des articulations de pivotement et de basculement qui seront soumises à des efforts très réduits par rapport à ceux s'exerçant sur de telles articulations dans les appareils connus. Ces articulations pourront être réduites en dimensions et ainsi en poids.

Les actionneurs des articulations pourront également être dimensionnés de manière plus réduite.

Le mouvement du tube télescopique du chariot sur le rail de guidage ne sera pratiquement pas soumis à des efforts déséquilibrés puisque le tube télescopique avec sa charge (le tuyau à poser) sera appuyé sur le rail de guidage de part et d'autre de la fixation du rail de guidage à la tête d'accrochage. Cela est également avantageux pour le rail de guidage qui ne recevra plus le tube télescopique en porte-à-faux d'un seul côté de sa fixation à la tête d'accrochage.

Les efforts à fournir pour pivoter et basculer le chariot avec le tuyau seront beaucoup plus faibles et les manœuvres pourront se guider de façon plus précise car l'inertie de la charge à déplacer est plus faible. Suivant une autre caractéristique avantageuse, le rail de guidage est relié à la tête d'accrochage à travers au moins une découpe en forme de lumière réalisée dans le tube du chariot.

La paire de lumières du tube télescopique n'affaiblit pas le tube ni ne gêne sa mobilité. La longueur des lumières correspond sensiblement à la course du tube télescopique par rapport au rail de guidage tenant compte de l'écartement des points de fixation de la tête d'accrochage au rail de guidage. Le tube télescopique s'appuie sur le rail de guidage de part et d'autre des lumières de sorte que les efforts se transmettent entre le tube et le rail au-delà des lumières de façon sensiblement équilibrée par rapport à la fixation du rail à la tête d'accrochage.

Suivant une autre caractéristique avantageuse, pour son appui sur le rail de guidage, le tube télescopique comporte un palier lisse à son entrée et un palier lisse au-delà de la lumière, en deçà de l'extrémité du rail correspondant à la position d'extension maximale du tube télescopique par rapport au rail de guidage.

Les paliers lisses sont sollicités de façon très équilibrée par la charge du tube et du tuyau porté, ce qui est avantageux pour le contact des paliers et la facilité de la mobilité, favorable à la précision des manœuvres de positionnement puis de pose.

Suivant une autre caractéristique avantageuse, le rail de guidage et le tube télescopique ont une section rectangulaire, notamment carrée et les deux côtés latéraux sont munis chacun d'une lumière pour la fixation du rail de guidage à la tête d'accrochage.

Cette complémentarité des sections permet d'avoir une grande surface de contact entre les deux éléments, quelle que soit la direction des efforts à transmettre pendant la manœuvre de l'appareil.

Suivant une autre caractéristique avantageuse, au-delà de l'appui côté chariot, le rail de guidage comporte une fourchette de positionnement avec un arceau pour venir derrière la doucine du tube posé et guider le positionnement précis de l'appui en forme de ventouse près de l'extrémité du tube posé.

Cette fourchette permet une approche précise du rail de guidage avant sa fixation au tuyau posé. Cette approche est facilitée d'autant plus que la fourchette de positionnement est reliée au rail de guidage par une liaison à lumière et un ressort de compression pour appliquer l'arceau sur le tube posé et guider le mouvement de descente du rail de guidage et de l'appui pour le positionnement du rail et sa fixation au tuyau par l'accrochage de la ventouse sur le tuyau posé.

Suivant une autre caractéristique avantageuse, la fourchette porte un index pour positionner axialement le rail de guidage par rapport au plan d'entrée du tuyau posé.

L'index permet de connaître de façon précise la position du plan d'entrée de la doucine par rapport au chariot et donc au tuyau à poser.

La mise en place, tant du rail de guidage sur le tuyau posé que préalablement, la mise en place du chariot sur le tuyau à poser sont d'autant plus faciles que l'appui du rail et le support du chariot ont chacun un organe de fixation en forme de ventouse reliés chacun à une source de dépression, commandée, chaque ventouse étant respectivement suspendue sous le rail ou sous le tube télescopique du chariot par deux attaches réalisant une articulation transversale d'amplitude limitée.

Suivant une autre caractéristique avantageuse, chaque attache est formée par une double patte traversée par une broche et fixée respectivement au rail et au tube, et à laquelle une patte respective des ventouses est reliée avec un jeu de basculement latéral, par un axe.

Le jeu de basculement est favorisé par des dômes des deux parties traversées par la broche pour tenir la patte de la ventouse en place sur la broche dans la direction transversale tout en lui permettant de basculer entre la double patte.

Ce mouvement de basculement peut être nécessaire pour appliquer la ventouse sur le tuyau. Mais ensuite, lorsque la ventouse est appliquée, les efforts exercés entre la ventouse et le rail de guidage ou la ventouse et le rail télescopique, ramèneront nécessairement les ventouses dans le plan vertical.

De façon avantageuse, la tête d'accrochage comprend :
une articulation de pivotement d'axe vertical formée de deux parties dont l'une est solidaire de l'organe de fixation relié à l'engin,
l'autre est solidaire de l'articulation de basculement,
l'articulation de basculement se compose de deux branches reliées par un axe de liaison, horizontal,
la première branche étant solidaire de la deuxième partie de l'articulation de pivotement,
la seconde branche étant solidaire du rail de guidage,
ces deux branches étant reliées par un vérin de basculement.
Cette combinaison dont l'articulation de basculement est reliée au rail de guidage permet de réduire l'encombrement en hauteur de la tête d'accrochage. Cet avantage est encore accentué du fait que selon une autre caractéristique, la première branche est formée de deux plaques reliées par la deuxième partie de l'articulation de pivotement et un axe portant le vérin et par l'axe d'articulation, la deuxième branche est formée de deux plaques reliées d'une part à l'axe et d'autre part avec un axe du vérin, ces deux plaques étant fixées au rail de guidage à travers le tube télescopique en laissant le libre passage pour le mouvement télescopique du tube du chariot.

La forme des deux branches et leur assemblage permet de fixer les deux plaques de la deuxième branche au rail de guidage de part et d'autre des deux côtés du tube télescopique ainsi traversé dans ses deux lumières. Cette fixation se fait à la base des deux plaques par deux points de fixation relativement écartés, avantageux pour les efforts transmis entre le tube télescopique chargé et les deux branches.

De façon avantageuse, pour réduire l'encombrement extérieur, le tube télescopique loge un vérin s'appuyant sur le rail et commandant le mouvement du chariot.

Comme le tube télescopique est plus long que la longueur du rail de guidage qui pénètre dans le tube télescopique, il y a en extrémité, à l'intérieur du tube télescopique, une place suffisante pour loger le vérin qui déplace le tube télescopique par rapport au rail de guidage.

Suivant une caractéristique avantageuse, l'extrémité du rail de guidage porte une caméra frontale et l'extrémité du tube télescopique, à son entrée recevant le rail de guidage, comporte une caméra intermédiaire, la caméra frontale fournissant une image du tuyau posé pour aligner le rail de guidage sur celui-ci et la caméra intermédiaire fournissant une image de la doucine du tuyau posé pour contrôler l'engagement du tuyau à poser dans la doucine du tuyau posé.

Les caméras permettent d'obtenir une image servant d'une part à aligner l'appareil sur le tuyau à poser et d'autre part, à contrôler l'engagement de l'extrémité du tuyau à poser dans la doucine du tuyau posé.

Suivant une autre caractéristique avantageuse, le tube télescopique est équipé d'une perche d'appui à son extrémité opposée à celle recevant le rail de guidage, la perche ayant un support porté par deux barres latérales engagées dans des paires de galets portées par les deux côtés du tube télescopique et un vérin installé sur le tube télescopique et dont la tige est reliée au support.

La perche d'appui est avantageuse pour soutenir des tuyaux de grandes dimensions et dont la longueur dépasse nettement la longueur du tube de guidage.

Inversement, cette perche permet de réduire la longueur du tube télescopique à la longueur la plus usuelle pour éviter un rail télescopique trop long et néanmoins de pouvoir poser des tubes télescopiques de grand diamètre et de longueur importante grâce à cette perche d'appui.

Selon une caractéristique avantageuse de l'invention, il comporte un dispositif de géolocalisation du rail de guidage et du chariot pour localiser et enregistrer la position du tuyau à poser à la fin de sa pose et permettre l'enregistrement du tracé réalisé avec les tuyaux posés et leur fonction.

Cette géolocalisation du tuyau après cette pose est, d'une part, précise puisqu'elle concerne le tuyau qui vient d'être posé avant que l'appareil de pose ne se détache du tuyau. Cela permet de corroborer la précision de l'emplacement de la pose avec l'orientation du tuyau posé.

Les informations de localisation de chaque tuyau posé sont combinées et enregistrées pour représenter le tracé des tuyaux posés et de l'emplacement de leur jonction deux à deux. Ce relevé topographique sera très utile ultérieurement pour des interventions précises sur des conduites évitant des fouilles importantes, multiples et coûteuses.

### BREVE DESCRIPTION DES DESSINS

La présente invention sera décrite ci-après de manière plus détaillée à l'aide des dessins annexés dans lesquels :
[Fig. 1] est une vue en perspective schématique d'un engin de levage portant un appareil de pose de tuyaux de canalisation selon l'invention,
[Fig. 2] est une vue en perspective de l'appareil de pose,
[Fig. 3] est une vue de côté de l'appareil de pose,
[Fig. 4A] est une vue à échelle agrandie de la partie de l'appareil comprenant sa tête de fixation et du rail de guidage,
[Fig. 4B] est une vue en perspective de la fourchette de positionnement et des composants voisins de l'appareil de pose,
[Fig. 5] est une vue en perspective de détail d'une attache de ventouse,
[Fig. 6] est une vue en perspective de la fourchette de positionnement,
[Fig. 7] est une vue en perspective partielle de l'appareil au niveau du rail de positionnement placé sur le tuyau posé et du tuyau à poser aligné sur le tuyau posé,
[Fig. 8A] et
[Fig. 8B] sont différentes vues montrant les phases de positionnement de l'appareil et du tuyau qu'il porte face à un tuyau posé:

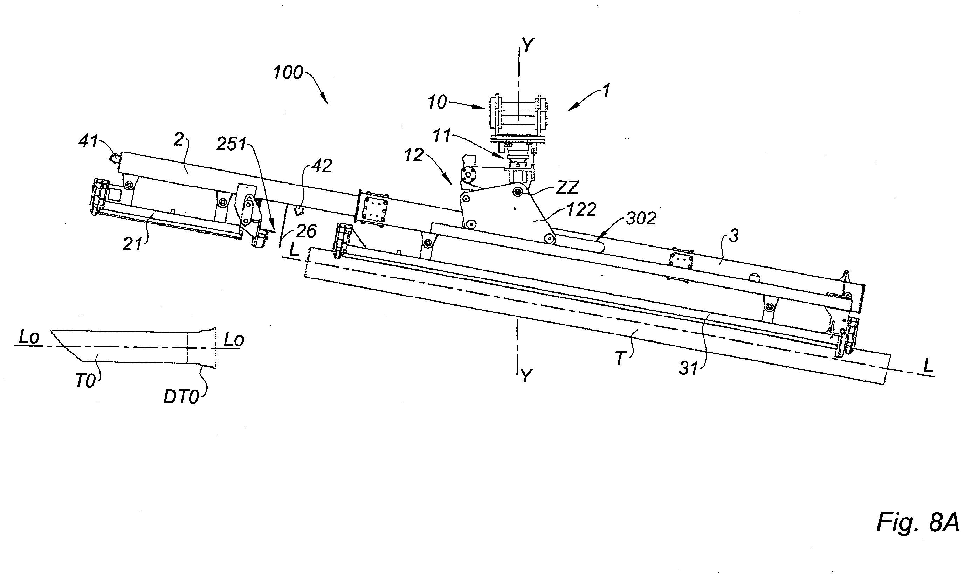

[Fig. 8A] montre la phase initiale de positionnement,

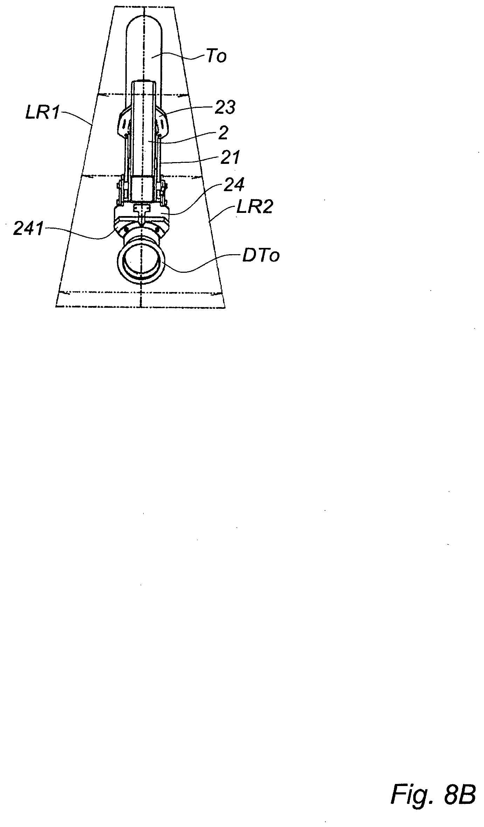

[Fig. 8B] est l'image de l'écran de contrôle pour la phase initiale de positionnement,

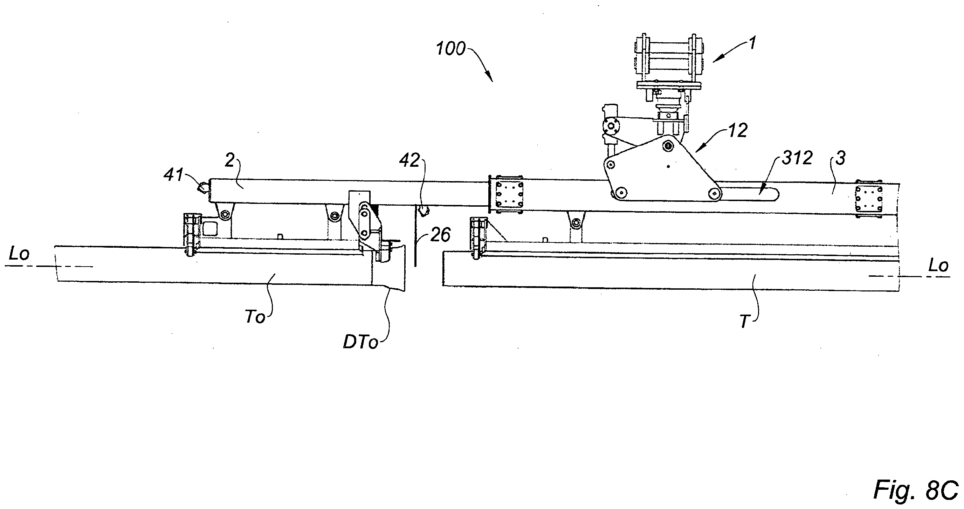

[Fig. 8C] montre schématiquement une vue de côté de l'appareil positionné sur le tuyau posé et présentant face à lui, le tuyau à poser,

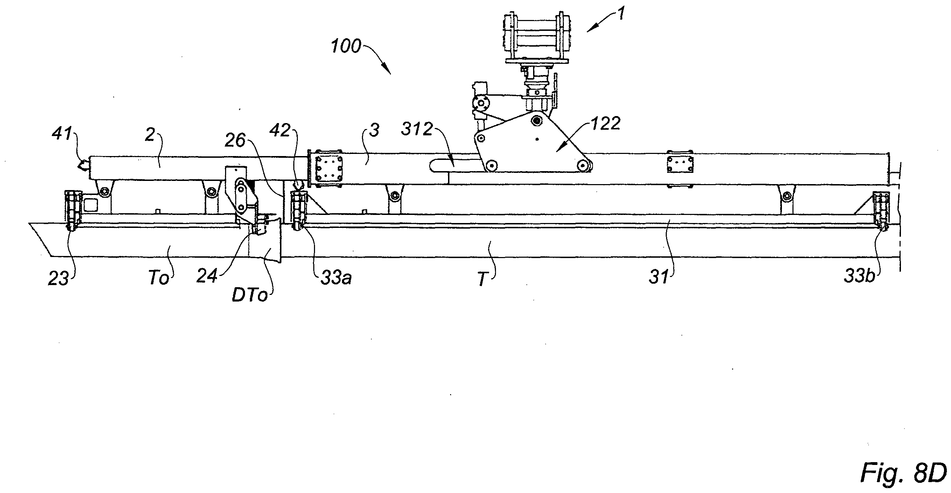

[Fig. 8D] montre une vue de côté du résultat de l'assemblage du tuyau,

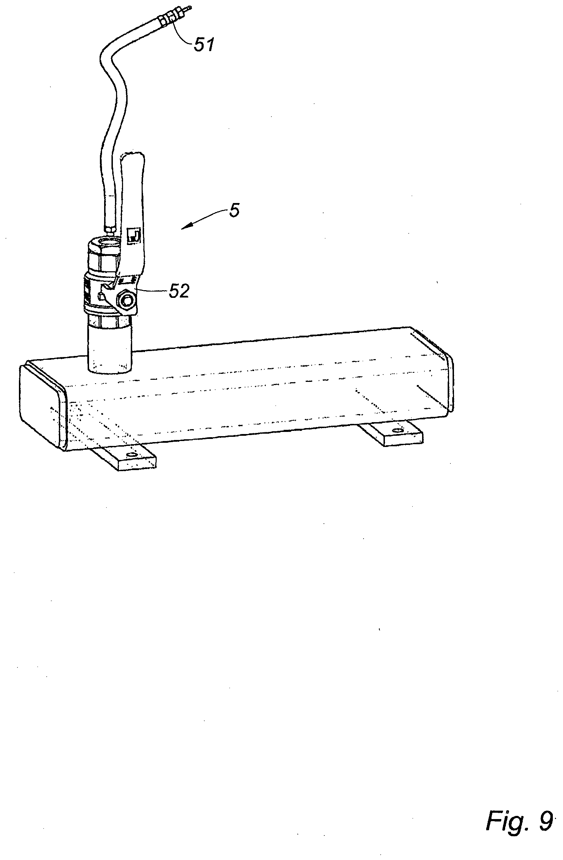

[Fig. 9] est une vue en perspective du moyen de contrôle du joint d'assemblage, et

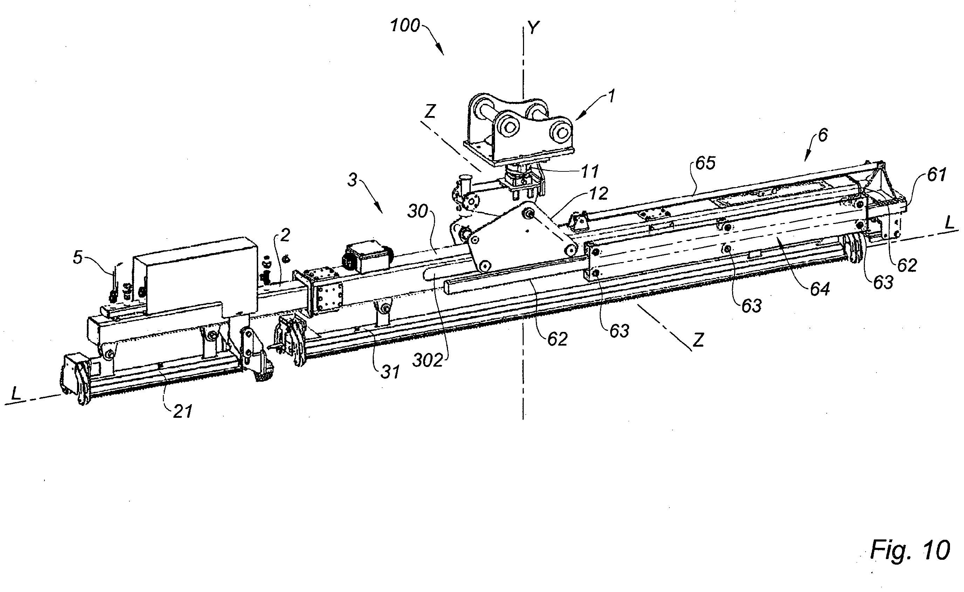

[Fig. 10] est une vue en perspective d'un exemple d'appareil de pose et de ses différents composants.

### DESCRIPTION D'UN MODE DE REALISATION

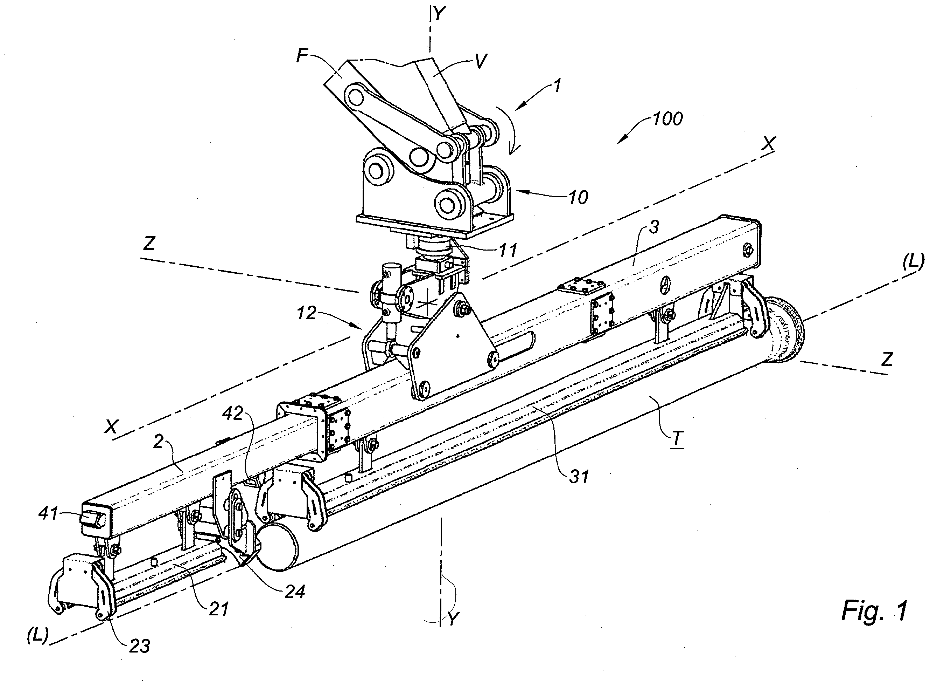

Selon La figure 1, l'invention a pour objet un appareil 100 de pose d'éléments de canalisation (tuyaux T). Cet appareil est porté par le bras articulé F équipé d'un vérin V d'un engin de travaux publics. Le tuyau T porté par l'appareil 100 doit être posé et raccordé au tuyau To déjà posé et qui est en général au fond d'une tranchée.

Pour faciliter la description, on utilisera un repère orthogonal X, Y, Z associé à l'appareil 100 pour définir les différentes orientations commandées par l'opérateur de l'appareil 100 à l'aide d'une manette ; cette commande se fait en fonction des données relatives à l'appareil 100, celles du tuyau posé To et de l'environnement de pose, c'est-à-dire la tranchée ; ces données apparaissent sur l'écran associé à l'appareil 100 montrant le repérage du tuyau posé To par les caméras 41, 42 équipant l'appareil 100. Ainsi, on positionne d'abord le tuyau à poser T dans l'axe du tuyau posé To en s'aidant de la caméra frontale 41 et on engage le tuyau T dans la doucine DTo du tuyau posé To dans l'alignement de ce tuyau To en s'aidant de la caméra intermédiaire 42.

Plus précisément, l'axe vertical YY est celui de l'articulation de pivotement de l'appareil 100 ; l'axe ZZ est l'axe de basculement ; l'axe XX est un axe de référence horizontal perpendiculaire au plan YY/ZZ et l'axe LL est l'axe du tuyau à poser T. Le tuyau posé To non représenté dans cette figure a pour axe LoLo. Le vérin V du bras F permet de maintenir l'axe YY en orientation verticale comme orientation de référence facilitant la manœuvre autour de l'axe ZZ et par rapport à la direction XX qui est de ce fait horizontale. De façon simplifiée, pour positionner le tuyau T dans l'axe LoLo, il faut que l'engin manœuvre son bras articulé F pour placer l'axe YY dans le plan vertical contenant l'axe LoLo du tuyau posé To puis pivoter l'appareil 100 avec le tuyau T, pour mettre l'axe LL du tuyau T dans le plan vertical passant par l'axe LoLo. Cela se fait par la manœuvre de l'articulation de pivotement (axe YY) et la descente du tuyau T dans ce plan puis le basculement par l'articulation de basculement 12 pour aligner l'axe LL sur l'axe LoLo ; cet alignement se précise ensuite en appuyant l'appareil 100 sur le tuyau To et en vérifiant la précision de l'alignement sur l'écran de contrôle pour ensuite, dès que l'alignement LL sur LoLo est réalisé, bloquer le rail de guidage 2 de l'appareil 100 sur le tuyau To et emmancher le tuyau T comme cela sera détaillé ensuite.

La position du tuyau posé To a déjà été localisée et celle du tuyau à poser sera localisée lorsque le tuyau T sera mis en place. Cela permet d'établir une cartographie précise du tracé de la canalisation qui facilitera considérablement les interventions futures sur cette canalisation, en particulier permettra des fouilles précises, rapides et de coût réduit.

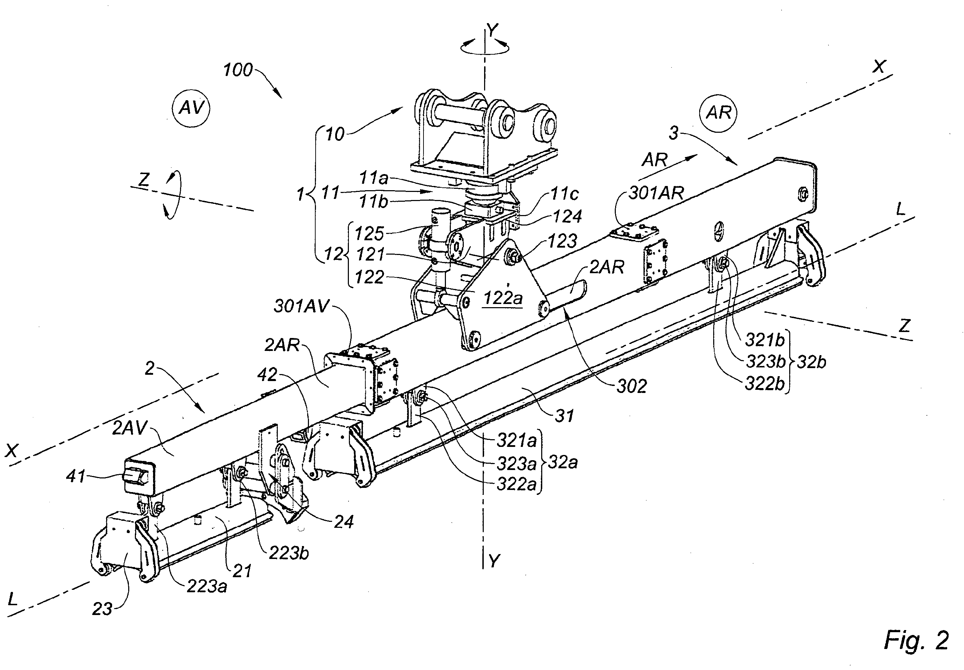

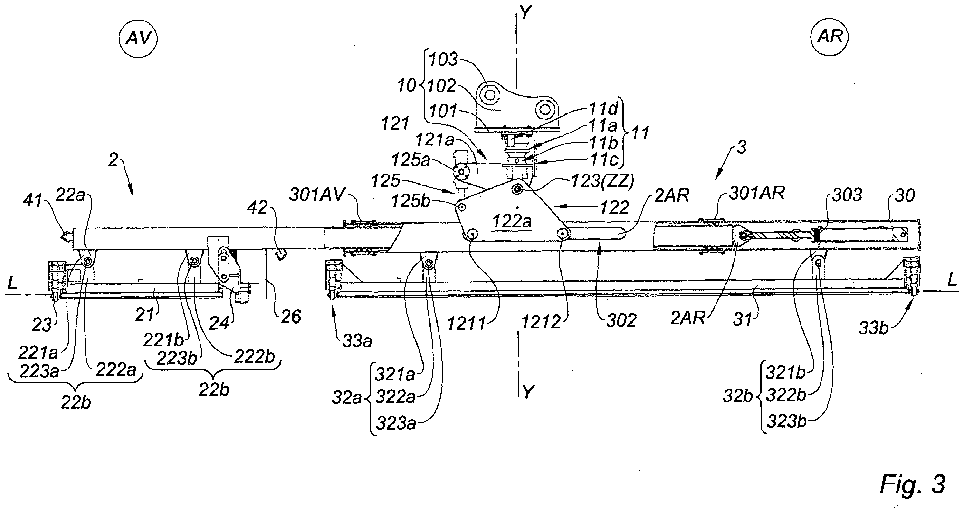

Les figures 2 et 3 montrent l'appareil 100 dans sa forme simplifiée, limitée aux seuls éléments nécessaires à la description de base de l'invention. Le repère orthogonal X, Y, Z a été repris avec aussi la direction d'orientation avant AV et arrière AR selon l'axe XX et plus globalement l'axe LL du tuyau à poser T. Le tuyau T n'est pas représenté aux figures 2, 3 mais son axe LL associé de manière précise à l'appareil 100 est tracé sur les figures.

L'appareil de pose 100 se compose d'une tête d'accrochage 1 pour être relié au bras articulé F et au vérin V de l'engin. Cette tête 1 porte un rail de guidage et de positionnement 2 d'un chariot 3 transportant le tuyau T qui sera positionné par rapport au tuyau posé To.

La tête d'accrochage 1 se compose d'un organe d'accrochage 10 relié à une articulation de pivotement 11, (axe YY), continuée par une articulation de basculement 12 (axe ZZ) portant le rail de guidage 2 et le tuyau T.

L'articulation de basculement 12 est reliée solidairement au rail de guidage 2 pour se fixer au tuyau To après son positionnement (son orientation par rapport au tuyau To). Le rail de guidage 2 porte le chariot 3 en forme de tube 30 emmanché de manière télescopique sur le rail de guidage 2 et tenant le tuyau T par une ventouse 31.

De façon plus détaillée, l'organe de fixation 10 est solidarisé à un organe complémentaire non représenté dans ces figures, de l'extrémité du bras articulé F recevant l'organe de fixation 10. L'organe de fixation 10 est solidaire en rotation du bras articulé F et conserve cette orientation autour de la direction verticale YY.

Dans cet exemple, l'organe de fixation 10 est formé d'une plaque 101 avec deux parois 102 parallèles, traversées par des goujons 103 pour l'assemblage à l'organe complémentaire et au vérin V du bras articulé F. La plaque 101 porte l'articulation de pivotement 11 en forme d'actionneur rotatif, hydraulique, non détaillé. Son axe définit l'axe géométrique YY. L'articulation de pivotement 11 est formée de deux parties, l'une 11a reliée à la plaque 101 de l'organe 10 et l'autre, 11b reliée à l'articulation de basculement 12 composée de deux branches 121, 122. La branche 121 porte une butée de pivotement 11c solidaire en pivotement de la partie 11b et en saillie vers le haut ; le dessous de la plaque 101 porte une contre-butée 11d. Cette contre-butée 11 solidaire de la partie 1 la limite le pivotement autour de l'axe YY.

L'articulation de pivotement 11 est fixée à la première branche 121 de l'articulation de basculement 12 par sa partie 11b ; la première branche 121 est reliée à la seconde branche 122 par un axe 123 définissant l'axe géométrique ZZ. La première branche 121 est formée de deux plaques 121a portant l'axe 123 et réunies sur le dessus par une plaque 124 fixée à la deuxième partie 11b de l'articulation de pivotement 11.

L'axe 123 est situé sur la branche 121 pour que son axe géométrique ZZ coupe perpendiculairement l'axe géométrique YY.

Les deux plaques 121a sont de forme triangulaire avec la plaque 124 près de l'un des sommets, l'autre sommet étant occupé par l'axe 123 et le troisième sommet, par un axe 125a portant le vérin 125 qui commande cette articulation de basculement 12.

La deuxième branche 122 est également composée de deux plaques 122a en forme de quadrangle recevant entre elles la première branche 121 ; la seconde branche 122 est assemblée à la première branche 121 par l'axe 123 et par l'axe 125a du vérin 125 porté aussi par les deux plaques 122a en l'un de leurs sommets.

Les deux autres sommets définissent un côté de la branche 1 22. Ces deux sommets sont occupés par des points de fixation 1221, 1222 écartés et portés par le rail de guidage 2. Les points de fixation réalisent des liaisons par vissage pour permettre le montage/démontage de la deuxième branche 122 par rapport au rail de guidage 2 à travers la lumière 312 du tube télescopique 30 du chariot 3 comme cela sera vu ensuite.

Par cet assemblage, le rail de guidage 2 est solidaire en basculement par rapport à la seconde branche 122 et solidaire en pivotement par rapport à la deuxième partie 11b de l'articulation de pivotement 11 par l'intermédiaire de l'articulation de basculement 12. Dans cet exemple, le corps 1251 du vérin 125 porte l'axe 125a reliant les deux plaques 121a et sa tige 1252 est reliée à l'axe 125b. Cette disposition simplifie le branchement du vérin 125 à partir de la tête d'accrochage 1.

Le rail de guidage 2 porté par la tête d'accrochage 1 est un tube de section carrée dont la longueur, en partie cachée, est suffisante d'une part pour guider le mouvement du chariot 3 portant le tube T en position d'attente, et, d'autre part, que son poids soit réparti de façon sensiblement égale de part et d'autre de l'axe YY, en équilibre. Dans cette position d'attente, le chariot 3 porte le tube T dont l'extrémité à emmancher est suffisamment éloignée de la partie du rail 2 à positionner sur le tuyau To pour permettre cette manœuvre d'approche et de mise en place par rapport au tuyau posé To.

L'extrémité avant 2AV du rail 2 est munie de deux attaches 22a, 22b portant une ventouse 21 allongée, pour couvrir une certaine longueur du dessus du tuyau To et s'y accrocher par dépression. La ventouse 21 est munie, du côté avant, d'une fourchette de guidage 23 ayant des galets pour s'appuyer sur le dessus du tuyau To et se laisser guider en descente jusqu'à la mise en place de la ventouse 21. Les deux attaches 22a, 22b sont formées chacune par une double patte 221a, 221b solidaire du dessous du rail 2 recevant entre elles une patte 222a, 222b solidaire du dessus de la ventouse 21.

La double patte 221a, 221b de la ventouse 21a est traversée avec du jeu par l'axe transversal 223a,b en forme de broche reliant les doubles pattes 221 fixées au-dessous du rail 2, laissant une certaine liberté de basculement dans cette direction transversale.

L'organe de guidage avant, 23, est solidaire de la patte avant 222a de la ventouse 21.

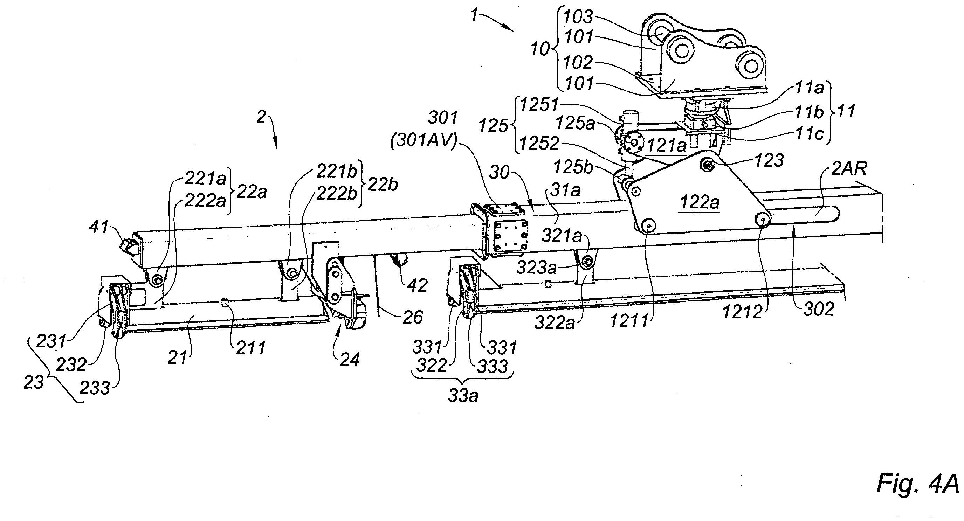

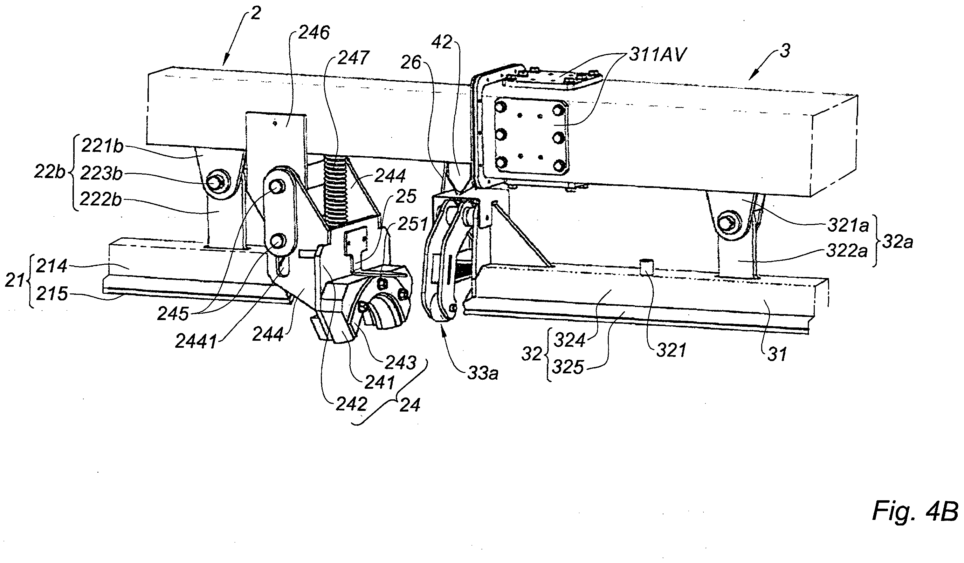

L'autre attache 22b est devant une fourchette de positionnement 24 reliée au rail 2 et dont la description sera détaillée à l'appui des figures 4A, 4B.

Le chariot 3 est formé d'un tube 30 de section carrée emmanché télescopiquement sur le tube formant le rail 2. Le tube 30 est muni de paliers intérieurs 301AV sur ses quatre faces près de son extrémité avant et de paliers intérieurs 301AR vers l'arrière au-delà de la position (variable) de la fixation de la deuxième branche 122 de l'articulation de basculement 12 au rail de guidage 2. Les côtés du rail de guidage 2 s'appuient sur les paliers 301AV, 301AR, quelle que soit la position de réglage télescopique du chariot 3 par rapport au rail de guidage 2.

Le tube 30 a deux découpes allongées, formant des lumières 302 laissant apparaître la partie arrière 2AR du rail 2. Les deux lumières 302 sont orientées dans la direction de l'axe LL pour permettre le libre passage des points de fixation 1211, 1212 du rail de guidage 2 aux deux plaques 122a de la deuxième branche 122.

Les lumières 302 sont réalisées dans les deux faces latérales du tube 30. Ainsi, les deux plaques 122a du deuxième bras 122 chevauchent le tube 30 et sont reliées à la partie arrière 2AR du rail de guidage 2.

Le dessous du tube 30 est muni de deux attaches 32a, 32b à double pattes 321a, 321b portant la ventouse 31 recevant le tuyau T.

Le corps de cette ventouse 31 est relié aux doubles pattes 321a, 321b par une patte 322a, 322b et un axe 323a, 323b près de l'extrémité avant et de l'extrémité arrière de la ventouse, munies d'une fourchette de guidage 33a, 33b respective. Le déplacement du chariot 3 par rapport au rail de guidage 2 est commandé par un vérin 303 logé dans le tube 30 derrière l'extrémité 2AR du rail de guidage 2. Ce vérin 303 est installé dans le tube 30 à travers une trappe du dessus du tube 30.

La vue en coupe partielle par un plan vertical passant par l'axe LL (figure 3) montre la structure interne du tube 30 actionné par le vérin 303.

La géométrie de l'assemblage télescopique formé par le rail de guidage 2 et le tube télescopique 30 du chariot 3 portant le tube T permet de placer la liaison (1221, 1222) entre le rail de guidage 2 et la tête d'accrochage dans une position aussi équilibrée que possible pour l'assemblage 1, 3 portant le tube T. La paire de lumières 302 sera réalisée en adéquation avec cette position de fixation quasi équilibrée et la longueur des paires de lumières sera fonction de la course relative du tube télescopique 30 par rapport aux points de fixation 1221, 1222. La course possible est la longueur de chaque lumière 302 qui reste libre au-delà des points de fixation 1221, 1222. Cette course est celle nécessaire pour positionner le rail de guidage 2 en appui sur le tuyau posé To sans que cette manœuvre préparatoire ne soit gênée par l'extrémité du tuyau à poser T, accroché au chariot 3. Cette distance de sécurité peut être de l'ordre de quelques dizaines de centimètres, ce qui fixe la longueur disponible des lumières. Cela définit également la position des paliers entre le rail de guidage 2 et la tube télescopique 30 et aussi la longueur maximale du rail 2 dans le tube télescopique 30.

Selon les figures 2, 3, 4A, 4B, le guide avant 23 du rail 2 et les guides avant et arrière 33a, 33b du chariot 3 ont la même fonction et la même structure. La vue des deux guides 23, 33a,b dans deux directions opposées selon les figures 4A, 4B permet de voir leur structure. Ils sont solidaires du corps de la ventouse 21 ou de la ventouse 31. Chacun des guides 23, 33a, 33b se compose de deux bras cintrés 231, 331, pivotants, formés chacun par deux lames jumelées 232, 332 et munis chacun d'un galet 233, 333. Les bras 231, 331 sont rapprochés par un ressort non représenté et ils s'écartent au contact du tuyau To, T lorsque la ventouse 21 ou 31 descend sur le tuyau To, T.

Chaque ventouse 21, 31 est formée d'un dessus rigide 214, 314 portant en dessous une lèvre d'étanchéité 215, 315 en forme de bourrelet rectangulaire, destiné à s'appuyer sur le dessus du tuyau To, T pour délimiter des surfaces étanches rectangulaires, courbes sur le tuyau To, T et s'écraser lorsque la ventouse 21, 31 est appliquée contre le tuyau et se fixe par dépression.

La fourchette de positionnement 24 qui apparaît dans les vues des figures 4A, 4B est une pièce en forme de cavalier ; elle est destinée à se positionner sur l'extrémité du tuyau posé To derrière sa doucine DTo pour bien définir la position de fixation du rail de guidage 2 sur le tuyau posé To et garantir l'alignement ou le quasi alignement de l'axe géométrique LL sur l'axe géométrique LoLo du tuyau posé To.

La fourchette 24 se compose d'un arceau de contact 241, de section adaptée à celle du tuyau posé To suivant un arc inférieur à la moitié. L'arceau 241 taillé dans une plaque de matière plastique est porté par un support 242 laissant libre la surface de contact. L'arceau interchangeable 241 est fixé par des boulons au support 242 en étant appuyé par un contre-arceau 243.

Le support 242 est une plaque fixée à deux plaques de guidage 244 munies chacune d'une lumière 2441 traversée par deux broches de guidage 245. Ces broches 245 sont portées par deux pattes 246 descendant des côtés du rail de guidage 2. Un ressort de compression 247 s'appuie entre le support 242 et le rail de guidage 2 pour pousser le support 242 en position basse en fin de course des deux lumières 2441. Lorsque cette fourchette de positionnement 24 arrive sur le tuyau installé To, elle fait descendre le rail de guidage 2 jusqu'à la position de fin de course des deux lumières parallèles 2441, définissant ainsi la position de référence du rail 2 sur le tuyau installé To.

Le positionnement descendant (direction verticale YY) du rail 2 est aussi réglé en position longitudinale par rapport au tuyau To à l'aide d'un index 25 porté par l'arceau 241 et dont la pointe 251 définit le plan de l'ouverture de ce tuyau To. Le rail 2 a également une butée d'avancée 26 du chariot 3 portant le tuyau T formée par un faisceau émis à partir du dessous du rail de guidage 2. Cette butée 26 verticale permet de régler la longueur d'emmanchement de l'extrémité du tuyau T dans le tuyau To posé. Pour cela, le chariot 3 avance jusqu'à ce que l'extrémité avant du tuyau T rencontre la barrière lumineuse de cette butée 26. Le mouvement d'enfoncement est ensuite compté (calculé) à partir de cette position et selon les impératifs d'assemblage propres à ce type de tuyau T dans le tuyau posé To.

Les figures 4A, 4B montrent également les embouts 211, 321 des ventouses 21, 31 reliés par des tuyaux non représentés à la source de vide, commandée pour fixer les ventouses 21, 31 par dépression sur les tuyaux To, T ou libérer la prise.

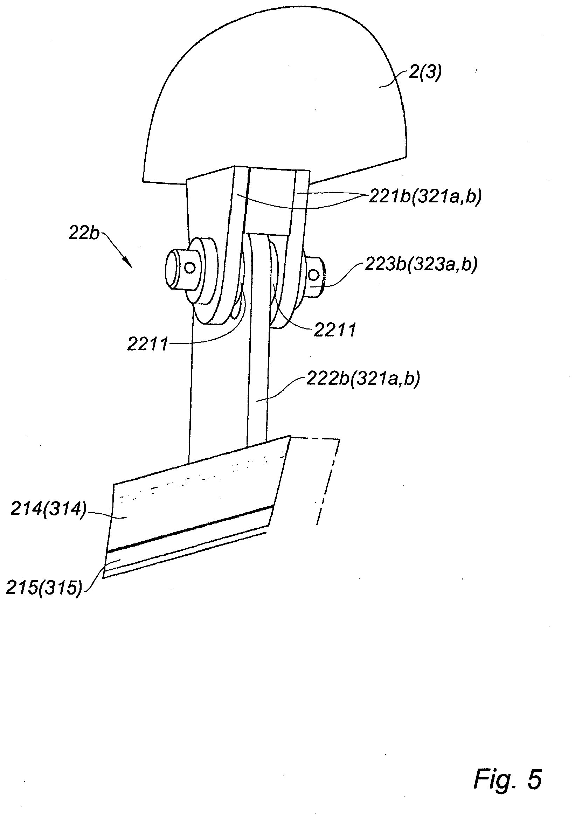

La figure 5 montre une attache de ventouse, tant celle 22 de la ventouse 21 du rail 2 sur le tuyau To que celle 32 de la ventouse 31 portant le tuyau T. Cette attache est décrite avec les références de l'attache 22bq de la ventouse 21. L'attache 22 est formée de la double patte 221b fixée au dessous du rail 2 et recevant la patte 222b reliée à la ventouse 21 ; l'ensemble est traversé par l'axe 223b. Pour avoir le degré de liberté transversale permettant un basculement d'adaptation transversale de la ventouse 21 sur le tuyau To, les pattes 221b ne sont pas en appui, surface contre surface, avec la patte 222b mais par l'intermédiaire de dômes 2211 sur leurs côtés face à la patte 222. L'axe 223b est amovible pour permettre la mise en place simple d'une ventouse de section adaptée au diamètre des tuyaux T à poser. Les différentes attaches des ventouses 21, 32 sont de même structure et ne seront pas décrites dans chaque cas.

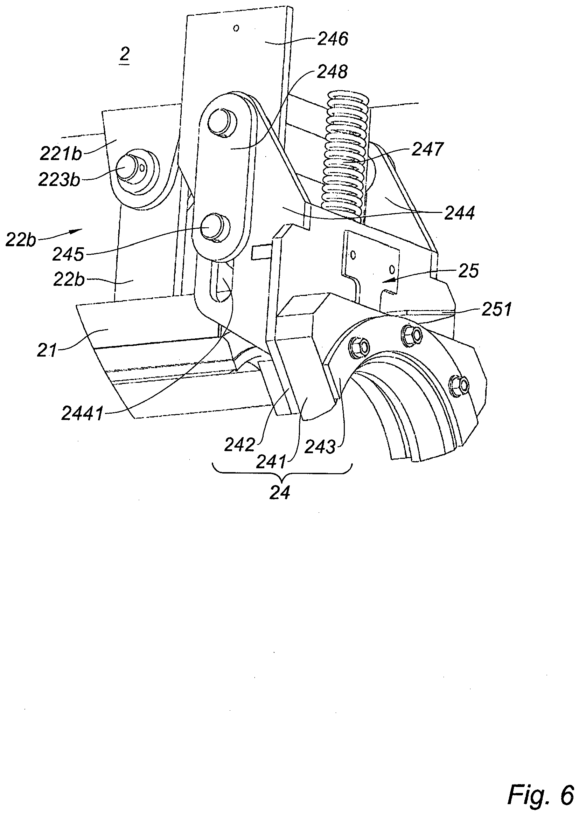

La figure 6 montre le détail du montage de la fourchette de positionnement 24 du rail de guidage 2.

La fourchette 24 se compose comme décrit ci-dessus, de l'arceau 241 porté par le support 242 coulissant dans le sens descendant/montant par rapport au rail 2 pour permettre un pré-positionnement de la fourchette 24 et ensuite sa mise en place finale et l'accrochage du rail de guidage 2 au tuyau posé To par la ventouse 21.

Le support 242 porte l'arceau 241 et les deux parois de guidage 244 ont deux lumières 2441. Les lumières 2441 parallèles sont orientées dans la direction du sens montant/descendant qui est en général la direction verticale ; cette orientation est perpendiculaire au rail 2. Les deux parois 244 chevauchent les pattes 246 fixées au-dessous du rail 2 et munies des deux broches 245 traversant les lumières 2441 et les guidant.

Une éclisse 248 ouvre chaque paroi 244 pour tenir la tête de chaque broche 245 et ne pas gêner le libre coulissement du support 242 par rapport aux deux broches 245.

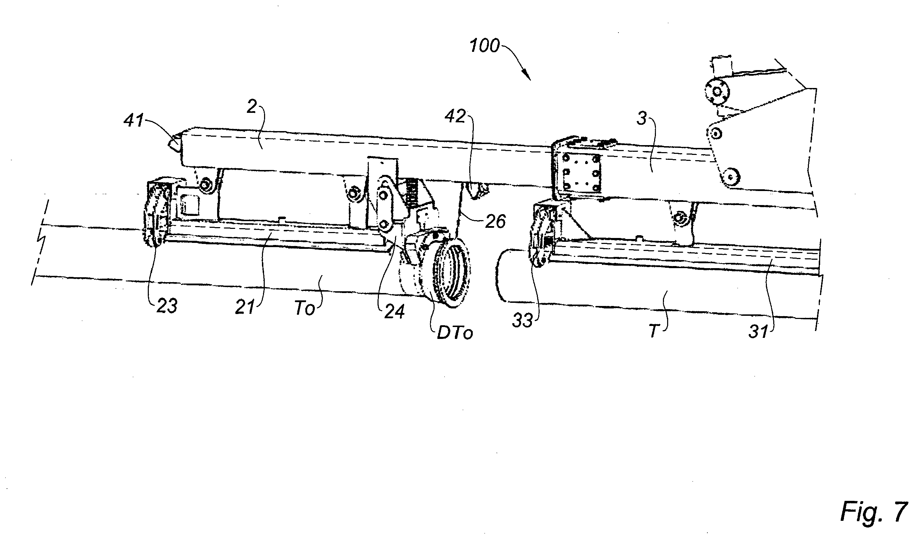

L'assemblage du support 242 aux pattes 246 est amovible pour permettre de le remplacer et de l'adapter à la section des tuyaux à poser. La figure 7 est une vue analogue à celle de la figure 4B mais montrant la mise en place du rail de guidage 2 à l'extrémité du tuyau posé To. La fourchette de positionnement 24 est placée derrière la doucine DTo du tuyau To dont le plan de l'ouverture (perpendiculaire à l'axe LoLo) passe sur l'extrémité 251 de l'index 25. La ventouse 21 s'est fixée sur le dessus du tuyau To et ainsi le rail 2 est bloqué dans cette position alignée, les axes LoLo et LL coïncident.

Le chariot 3 qui a éventuellement été reculé pour laisser plus de place devant le tuyau To est maintenant avancé jusqu'à la butée 26. La phase d'emmanchement du tuyau T peut commencer.

Les figures 8A-8F montrent différentes étapes de mise en place du tuyau T et de sa jonction avec le tuyau posé To.

La figure 8A montre la phase initiale de positionnement de l'appareil 100 portant le tuyau T. L'appareil 100 est descendu à l'aide du bras articulé de l'engin en contrôlant l'alignement de l'axe LL pour venir en position coaxiale avec l'axe LoLo du tuyau To. Le mouvement est contrôlé à vue puis avec l'image de la caméra 41 sur l'écran de contrôle (figure 8B).

Les lignes de repère LR1, LR2 incrustées dans l'image permettent de guider le rail 2 pour l'aligner dans le plan vertical du tuyau posé To et arriver au pré-positionnement schématisé à la figure 8C.

Puis à l'aide de l'image de la deuxième caméra 42 dirigée face à l'ouverture DTo du tuyau To, on ajuste l'alignement de l'axe LL sur l'axe LoLo de façon précise.

L'écran de contrôle montre l'image juste avant que l'arceau 241 ne vienne sur le tuyau To derrière la doucine DTo.

Puis le rail 2 est abaissé et l'emmanchement peut commencer selon la distance fixée par rapport à la position initiale de repérage figurée par le repère 26 (figure 8D).

La figure 9 est une vue du moyen de contrôle 5 de l'intégrité du joint de la doucine DTo après l'emmanchement. Pour cela, on fixe une seringue 51 dans un orifice du joint et on fait le vide dans le joint avec la vanne 52 reliée à la source de vide utilisée par les ventouses 21, 31. Le moyen de contrôle 5 est installé sur le rail de guidage de sorte qu'il est proche de la doucine DTo au moment de l'assemblage du tuyau T.

Si le vide reste maintenu, cela signifie que le joint est intact. Dans le cas contraire, cela signifie que le joint est abîmé et qu'il faut recommencer la mise en place du tuyau T après avoir remplacé le joint abîmé de la coucine DTo du tuyau To.

La figure 10 est une vue en perspective plus détaillée de l'appareil de pose 100 équipé d'une perche d'appui 6 destinée à aider à soutenir des tuyaux de diamètre relativement grand et plus longs que ceux qui correspondent sensiblement à la longueur du chariot 3. La perche d'appui 6 se compose d'un support 61 porté par deux barres latérales 62 guidées chacune dans des paires de galets 63 fixés aux deux côtés du tube télescopique et couvertes par un capot ou formant un boitier 64 solidaire du tube télescopique 30 du chariot 3. La perche 6 est actionnée par un vérin 65 installé sur le dessus du tube 30 et relié au support 61. Dans ce mode de réalisation de l'appareil de pose 100, l'équipement pneumatique, notamment les électrovannes de mise en dépression des ventouses 21, 31 équipent le dessus du rail 2 ainsi qu'un voyant de signalisation 7 et le moyen de contrôle d'étanchéité 5.

### NOMENCLATURE DES ELEMENTS PRINCIPAUX

- 100: Appareil de pose de tuyaux
- 1: Tête d'accrochage
- 10: Organe de fixation
- 101: Plaque
- 102: Paroi
- 103: Goujon
- 11: Articulation de pivotement
- 11a: Première partie
- 11b: Seconde partie
- 11c: Butée
- 11d: Contre-butée
- 12: Articulation de basculement
- 121: Première branche
- 121a: Plaque
- 122: Deuxième branche
- 122a: Plaque
- 1221, 1222: Points de fixation
- 123: Axe de liaison
- 124: Plaque
- 125: Vérin
- 125a: Axe
- 125b: Axe
- 1251: Corps de vérin
- 1252: Tige de vérin
- 2: Rail de guidage
- 2AV: Extrémité avant
- 2AR: Extrémité arrière
- 21: Ventouse
- 211: Embout
- 214: Dessus rigide
- 215: Lèvre d'étanchéité
- 22, 22a,b: Attaches
- 221a,b: Double patte
- 222a,b: Patte de la ventouse
- 223a,b: Axe
- 23a: Guide avant
- 23b: Guide arrière
- 231: Bras cintré pivotant
- 232: Lame
- 233: Galet
- 24: Fourchette de positionnement
- 241: Arceau
- 242: Support
- 243: Contre-arceau
- 244: Plaque de guidage
- 2441: Lumière
- 245: Broches
- 246: Patte
- 247: Ressort de compression
- 248: Eclisse
- 25: Index
- 251: Pointe
- 26: Butée
- 3: Chariot tubulaire
- 30: Tube télescopique
- 30a: Tube télescopique
- 301: Paliers
- 301AV: Palier avant
- 301AR: Palier arrière
- 302: Lumière
- 303: Vérin
- 31: Ventouse
- 311: Raccord
- 314: Dessus rigide
- 315: Lèvre d'étanchéité
- 32, 32a,b: Attaches
- 321a,b: Double patte fixée au chariot
- 322a,b: Patte de la ventouse
- 323a,b: Axe
- 33a,b: Fourchettes de guidage/guide avant/guide arrière
- 331: Bras cintré pivotant
- 332: Lame
- 333: Galet
- 41: Caméra frontale
- 42: Caméra intermédiaire
- 5: Moyen de contrôle
- 51: Seringue
- 52: Vanne
- 6: Perche d'appui
- 61: Support
- 62: Barres
- 63: Paires de galets
- 64: Boîtier
- 65: Vérin
- 7: Voyant de signalisation
- F: Bras articulé/flèche
- V: Vérin du bras
- YY: Axe vertical de pivotement
- ZZ: Axe horizontal de basculement
- XX: Axe perpendiculaire au plan YZ
- T: Tuyau à poser
- To: Tuyau posé
- DTo: Doucine du tuyau posé
- LL: Axe du tuyau à poser
- LoLo: Axe du tuyau posé

## Revendications

1. Appareil de pose de tuyaux de canalisation (T), pouvant être relié à la flèche (F) d'un engin de transport et portant le tuyau à poser (T) pour l'emmancher dans un tuyau posé (To), comprenant :
une tête d'accrochage (1) formée d'une articulation de pivotement (11) d'axe vertical (YY) et d'une articulation de basculement (12) d'axe horizontal (ZZ),
un rail de guidage (2) ayant
un appui (21) pour se positionner et se fixer sur l'extrémité du tuyau posé (To) et aligner le tuyau à poser (T) sur le tuyau posé (To),
un chariot (3) formé d'un tube télescopique (30) emmanché sur le rail de
guidage (2) et actionné par rapport à celui-ci et muni d'un appui (31) portant le tuyau (T) à positionner et à emmancher dans la doucine (DTo) du tuyau posé (To),
appareil **caractérisé en ce que**
le rail de guidage (2) est relié à la tête d'accrochage (1) à travers le tube télescopique (30).

2. Appareil de pose de tuyaux selon la revendication 1, **caractérisé en ce que** le rail de guidage (1) est relié à la tête d'accrochage (1, 12) à travers d'au moins une lumière (302) réalisée dans le tube télescopique (30) du chariot (3).

3. Appareil de pose de tuyaux selon la revendication 2, **caractérisé en ce que** pour son appui sur le rail de guidage (2), le tube télescopique (30) comporte un palier lisse (301AV) à son entrée et un palier lisse (301AR) au-delà de la lumière (302), en deçà de l'extrémité du rail (2) correspondant à la position d'extension maximale du tube télescopique (1) par rapport au rail de guidage (2).

4. Appareil de pose de tuyaux selon la revendication 1, **caractérisé en ce que** le rail de guidage (2) et le tube télescopique (30) ont une section rectangulaire, notamment carrée et les deux côtés latéraux (30a) sont munis chacun d'une lumière (302) pour la fixation du rail de guidage (2) à la tête d'accrochage (1) à travers les lumières (302).

5. Appareil de pose de tuyaux selon la revendication 1, **caractérisé en ce qu'**au-delà de l'appui (21) côté chariot (3), le rail de guidage (2) comporte une fourchette de positionnement (24) avec un arceau (241) pour venir derrière la doucine (DTo) du tube posé (To) et guider le positionnement précis de l'appui en forme de ventouse (21) près de l'extrémité du tube posé (To).

6. Appareil de pose de tuyaux selon la revendication 5, **caractérisé en ce que** la fourchette de positionnement (24) est reliée au rail de guidage (2) par une liaison à lumières (2441/245) et un ressort de compression (247) pour appliquer l'arceau (241) sur le tube posé (To) et guider le mouvement de descente du rail de guidage (2) et de l'appui (21) pour le positionnement du rail (2) et sa fixation au tuyau (To) par l'accrochage de la ventouse (21) sur le tuyau posé (To).

7. Appareil de pose de tuyaux selon la revendication 6, **caractérisé en ce que** la fourchette (24) porte un index (25) pour positionner axialement le rail de guidage (2) par rapport au plan d'entrée du tuyau posé (To).

8. Appareil de pose de tuyaux selon la revendication 1, **caractérisé en ce que** l'appui (21) du rail (2) et le support (31) du chariot (3) ont chacun un organe de fixation en forme de ventouse reliés chacun à une source de dépression, commandée, chacune des ventouse (21, 31) étant respectivement suspendue sous le rail (2) et sous le tube télescopique (30) du chariot (3) par deux attaches (22a,b, 32a,b) réalisant un degré de liberté formant une articulation transversale d'amplitude limitée.

9. Appareil de pose de tuyaux selon la revendication 8, **caractérisé en ce que** chaque attache (22a,b, 32a,b) est formée par une double patte (221a,b, 321a,b) traversée par une broche et fixée respectivement au rail (2) et au tube (30), et auquel est relié avec un jeu de basculement latéral, une patte (222a,b, 322a,b) respective des ventouses (21, 31) par un axe (223a,b, 323a,b).

10. Appareil de pose de tuyaux selon la revendication 1, **caractérisé en ce que** la tête d'accrochage (1) comprend : une articulation de pivotement (11) d'axe vertical (YY) formée de deux parties (11a, 11b) dont l'une (11a) est solidaire de l'organe de fixation (10) relié à l'engin,l'autre est solidaire de l'articulation de basculement (12), l'articulation de basculement (12) se compose de deux branches (121, 122) reliées par un axe de liaison (123), horizontal (ZZ), la première branche (121) étant solidaire de la deuxième partie (11b) de l'articulation de pivotement (11), la seconde branche (122) étant solidaire (1211, 1212) du rail de guidage (2), ces deux branches étant reliées par un vérin de basculement (125).

11. Appareil de pose de tuyaux selon la revendication 10, **caractérisé en ce que** la première branche (121) est formée de deux plaques (120a) reliées par la deuxième partie (11b) de l'articulation de pivotement (11) et un axe (125a) portant le vérin (125) et par l'axe d'articulation (123), la deuxième branche (122) est formée de deux plaques (122a) reliées d'une part à l'axe (123) et d'autre part avec un axe (125b) du vérin (125), ces deux plaques (122a) étant fixées au rail de guidage (2) à travers le tube télescopique (30) en laissant le libre passage pour le mouvement télescopique du tube (30) du chariot (3).

12. Appareil de pose de tuyaux selon la revendication 1, **caractérisé en ce que** le tube télescopique (30) loge un vérin (314) s'appuyant sur le rail (2) et commandant le mouvement du chariot (3).

13. Appareil de pose de tuyaux selon la revendication 1, **caractérisé en ce que** l'extrémité du rail de guidage (2) porte une caméra frontale (41) et l'extrémité du tube télescopique (30), à son entrée recevant le rail de guidage (2), comporte une caméra intermédiaire (42), la caméra frontale (41) fournissant une image du tuyau posé (To) pour aligner le rail de guidage (2) sur celui-ci, et la caméra intermédiaire (42) fournissant une image de la doucine (DTo) du tuyau posé (To) pour contrôler l'engagement du tuyau à poser (T) dans la doucine du tuyau posé (To).

14. Appareil de pose de tuyaux selon la revendication 1, **caractérisé en ce que** le tube télescopique (30) est équipé d'une perche d'appui (6) à son extrémité opposée à celle recevant le rail de guidage (2), la perche (6) ayant un support (61) porté par deux barres latérales (62) engagées dans des paires de galets (63) portées par les deux côtés du tube télescopique (30) et un vérin (65) installé sur le tube télescopique (30) et dont la tige est reliée au support (61).

15. Appareil de pose de tuyaux selon la revendication 1, **caractérisé en ce qu'**il comporte un dispositif de géolocalisation du rail de guidage (2) et du chariot (3) pour localiser et enregistrer la position du tuyau à poser (T) à la fin de sa pose et permettre l'enregistrement du tracé réalisé avec les tuyaux posés et leur fonction.

## Patentansprüche

1. Gerät zum Verlegen von Leitungsrohren (T), das mit dem Ausleger (F) einer Fördereinrichtung verbunden werden kann und das zu verlegende Rohr (T) trägt, um es in ein verlegtes Rohr (To) einzuschieben, enthaltend:
einen Aufhängekopf (1), der aus einem Schwenkgelenk (11) mit vertikaler Achse (YY) und einem Kippgelenk (12) mit horizontaler Achse (ZZ) gebildet ist,
eine Führungsschiene (2) mit
einem Auflager (21) zum Positionieren und Befestigen am Ende des verlegten Rohrs (To) und zum Ausrichten des zu verlegenden Rohrs (T) auf das verlegte Rohr (To),
einem Schlitten (3), der aus einem Teleskoprohr (30) besteht, das auf die Führungsschiene (2) aufgeschoben ist und relativ zu dieser betätigt wird und mit einem Auflager (31) versehen ist, welches das zu positionierende und in die Muffe (DTo) des verlegten Rohrs (To) einzuschiebende Rohr (T) trägt, wobei das Gerät **dadurch gekennzeichnet ist, dass**
die Führungsschiene (2) durch das Teleskoprohr (30) hindurch mit dem Aufhängekopf (1) verbunden ist.

2. Rohrverlegegerät nach Anspruch 1,
**dadurch gekennzeichnet, dass** die Führungsschiene (1) durch zumindest einen im Teleskoprohr (30) des Schlittens (3) ausgebildeten Schlitz (302) hindurch mit dem Aufhängekopf (1, 12) verbunden ist.

3. Rohrverlegegerät nach Anspruch 2,
**dadurch gekennzeichnet, dass** das Teleskoprohr (30) zu dessen Abstützung an der Führungsschiene (2) ein Gleitlager (301AV) an seinem Einlass und ein Gleitlager (301AR) jenseits des Schlitzes (302) im Bereich vor dem Ende der Schiene (2) aufweist, das der Position der maximalen Ausdehnung des Teleskoprohrs (1) in Bezug auf die Führungsschiene (2) entspricht.

4. Rohrverlegegerät nach Anspruch 1,
**dadurch gekennzeichnet, dass** die Führungsschiene (2) und das Teleskoprohr (30) einen rechteckigen, insbesondere quadratischen Querschnitt aufweisen und die beiden Seitenflächen (30a) jeweils mit einem Schlitz (302) zur Befestigung der Führungsschiene (2) am Aufhängekopf (1) durch die Schlitze (302) hindurch versehen sind.

5. Rohrverlegegerät nach Anspruch 1,
**dadurch gekennzeichnet, dass** die Führungsschiene (2) jenseits des Auflagers (21) auf der Seite des Schlittens (3) eine Positionierungsgabel (24) mit einem Bügel (241) aufweist, um die Muffe (DTo) des verlegten Rohrs (To) zu hintergreifen und die genaue Positionierung des saugnapfartigen Auflagers (21) nahe dem Ende des verlegten Rohrs (To) zu führen.

6. Rohrverlegegerät nach Anspruch 5,
**dadurch gekennzeichnet, dass** die Positionierungsgabel (24) über eine Schlitzverbindung (2441/245) und eine Druckfeder (247) mit der Führungsschiene (2) verbunden ist, um den Bügel (241) an das verlegte Rohr (To) anzulegen und die Abwärtsbewegung der Führungsschiene (2) und des Auflagers (21) zur Positionierung der Schiene (2) und ihrer Befestigung am Rohr (To) durch Angreifen des Saugnapfes (21) an dem verlegten Rohr (To) zu führen.

7. Rohrverlegegerät nach Anspruch 6,
**dadurch gekennzeichnet, dass** die Gabel (24) eine Kennzeichnung (25) zum axialen Positionieren der Führungsschiene (2) in Bezug auf die Einlassebene des verlegten Rohrs (To) trägt.

8. Rohrverlegegerät nach Anspruch 1,
**dadurch gekennzeichnet, dass** das Auflager (21) der Schiene (2) und die Lagerung (31) des Schlittens (3) jeweils ein saugnapfartiges Befestigungsorgan haben, die jeweils mit einer steuerbaren Unterdruckquelle verbunden sind, wobei die Saugnäpfe (21, 31) jeweils unter der Schiene (2) bzw. unter dem Teleskoprohr (30) des Schlittens (3) mittels zweier Aufhängungen (22a, b, 32a, b) aufgehängt sind, die einen Freiheitsgrad gestatten und eine Queranlenkung mit begrenzter Amplitude bilden.

9. Rohrverlegegerät nach Anspruch 8,
**dadurch gekennzeichnet, dass** jede Aufhängung (22a, b, 32a, b) aus einer Doppellasche (221a, b, 321a, b) gebildet ist, die von einem Stift durchquert wird und jeweils an der Schiene (2) bzw. dem Rohr (30) befestigt ist, und mit welcher über eine Achse (223a, b, 323a, b) eine jeweilige Lasche (222a, b, 322a, b) der Saugnäpfe (21, 31) mit Seitenkippspiel verbunden ist.

10. Rohrverlegegerät nach Anspruch 1,
**dadurch gekennzeichnet, dass** der Aufhängekopf (1) enthält: ein Schwenkgelenk (11) mit vertikaler Achse (YY), das aus zwei Teilen (11a, 11b) gebildet ist, von denen das eine (11a) fest mit dem mit der Fördereinrichtung verbundenen Befestigungsorgan (10) verbunden ist und das andere fest mit dem Kippgelenk (12) verbunden ist, wobei das Kippgelenk (12) aus zwei Schenkeln (121, 122) besteht, die durch eine horizontal (ZZ) verlaufende Verbindungsachse (123) verbunden sind, wobei der erste Schenkel (121) fest mit dem zweiten Teil (11b) des Schwenkgelenks (11) verbunden ist und der zweite Schenkel (122) fest (1211, 1212) mit der Führungsschiene (2) verbunden ist, wobei diese beiden Schenkel durch einen Kippzylinder (125) verbunden sind.

11. Rohrverlegegerät nach Anspruch 10,
**dadurch gekennzeichnet, dass** der erste Schenkel (121) aus zwei Platten (120a) gebildet ist, die durch das zweite Teil (11b) des Schwenkgelenks (11) und eine den Zylinder (125) tragende Achse (125a) sowie durch die Gelenkachse (123) miteinander verbunden sind, wobei der zweite Schenkel (122) aus zwei Platten (122a) gebildet ist, die einerseits mit der Achse (123) und andererseits mit einer Achse (125b) des Zylinders (125) verbunden sind, wobei diese beiden Platten (122a) durch das Teleskoprohr (30) hindurch an der Führungsschiene (2) befestigt sind, indem sie freien Durchgang für die Teleskopbewegung des Rohrs (30) des Schlittens (3) gestatten.

12. Rohrverlegegerät nach Anspruch 1,
**dadurch gekennzeichnet, dass** das Teleskoprohr (30) einen Zylinder (314) aufnimmt, der sich an der Führungsschiene (2) abstützt und die Bewegung des Schlittens (3) steuert.

13. Rohrverlegegerät nach Anspruch 1,
**dadurch gekennzeichnet, dass** das Ende der Führungsschiene (2) eine Frontkamera (41) trägt und das Ende des Teleskoprohrs (30) an seinem Einlass, der die Führungsschiene (2) aufnimmt, eine Zwischenkamera (42) aufweist, wobei die Frontkamera (41) ein Bild des verlegten Rohrs (To) liefert, um die Führungsschiene (2) darauf auszurichten, und die Zwischenkamera (42) ein Bild der Muffe (DTo) des verlegten Rohrs (To) liefert, um den Eingriff des zu verlegenden Rohrs (T) in die Muffe des verlegten Rohrs (To) zu kontrollieren.

14. Rohrverlegegerät nach Anspruch 1,
**dadurch gekennzeichnet, dass** das Teleskoprohr (30) an seinem Ende, das dem die Führungsschiene (2) aufnehmenden Ende gegenüberliegt, mit einem Stützgestänge (6) versehen ist, wobei das Gestänge (6) einen Träger (61), der von zwei Seitenholmen (62) getragen wird, die in von beiden Seiten des Teleskoprohrs (30) getragenen Rollenpaare (63) eingreifen, und einen Zylinder (65) aufweist, der an dem Teleskoprohr (30) montiert ist und dessen Stange mit dem Träger (61) verbunden ist.

15. Rohrverlegegerät nach Anspruch 1,
**dadurch gekennzeichnet, dass** es eine Vorrichtung zur Positionsbestimmung der Führungsschiene (2) und des Schlittens (3) aufweist, um die Position des zu verlegenden Rohrs (T) am Ende seiner Verlegung zu lokalisieren und aufzuzeichnen und die Aufzeichnung der erstellten Trasse mit den verlegten Rohren und ihrer Funktion zu ermöglichen.

## Claims

1. Device for laying pipelines (T), which can be connected to the boom (F) of a transport vehicle and which carries the pipe (T) to be laid in order to fit it into a laid pipe (To), comprising:
a fastening head (1) which is formed by a pivot joint (11) having a vertical axis (YY) and a tilting joint (12) having a horizontal axis (ZZ),
a guide rail (2) having
a support (21) for positioning and fixing to the end of the laid pipe (To) and aligning the pipe (T) to be laid on the laid pipe (To),
a carriage (3) which is formed by a telescopic pipe (30) which is fitted to the guide rail (2) and which is activated relative thereto and which is provided with a support (31) which carries the pipe (T) to be positioned and fitted in the curve (DTₒ) of the laid pipe (To),
which device is **characterised in that**
the guide rail (2) is connected to the fastening head (1) through the telescopic pipe (30).

2. Device for laying pipes according to claim 1, **characterised in that** the guide rail (1) is connected to the fastening head (1, 12) through at least one aperture (302) which is produced in the telescopic pipe (30) of the carriage (3) .

3. Device for laying pipes according to claim 2, **characterised in that**, for the support thereof on the guide rail (2), the telescopic pipe (30) comprises a sliding bearing (301AV) at the inlet thereof and a sliding bearing (301AR) beyond the aperture (302), below the end of the rail (2) corresponding to the maximum extension position of the telescopic pipe (1) relative to the guide rail (2).

4. Device for laying pipes according to claim 1, **characterised in that** the guide rail (2) and the telescopic pipe (30) have a rectangular, in particular square cross-section and the two lateral sides (30a) are each provided with an aperture (302) for fixing the guide rail (2) to the fastening head (1) through the apertures (302).

5. Device for laying pipes according to claim 1, **characterised in that**, beyond the support (21) at the side of the carriage (3), the guide rail (2) comprises a positioning fork (24) with a hoop (241) for moving behind the curve (DTo) of the laid pipe (To) and guiding the precise positioning of the support in the form of a suction cup (21) close to the end of the laid pipe (To).

6. Device for laying pipes according to claim 5, **characterised in that** the positioning fork (24) is connected to the guide rail (2) by means of a connection with apertures (2441/245) and a compression spring (247) in order to press the hoop (241) on the laid pipe (To) and to guide the downward movement of the guide rail (2) and the support (21) for the positioning of the rail (2) and the fixing thereof to the pipe (To) by fastening the suction cup (21) to the laid pipe (To).

7. Device for laying pipes according to claim 6, **characterised in that** the fork (24) carries an index (25) in order to axially position the guide rail (2) relative to the inlet plane of the laid pipe (To).

8. Device for laying pipes according to claim 1, **characterised in that** the support (21) of the rail (2) and the support (31) of the carriage (3) each have a fixing member in the form of a suction cup, which are connected in each case to a controlled reduced pressure source, each of the suction cups (21, 31) being suspended below the rail (2) and below the telescopic pipe (30) of the carriage (3), respectively, by means of two attachments (22a,b), 32a,b) which produce a degree of freedom which forms a transverse joint of limited amplitude.

9. Device for laying pipes according to claim 8, **characterised in that** each attachment (22a,b, 32a,b) is formed by a double tab (221a,b, 321a,b) through which a pin extends and which is fixed to the rail (2) and to the pipe (30) respectively, and to which there is connected with a lateral tilting play a respective tab (222a,b, 322a,b) of the suction cups (21, 31) via an axle (223a,b, 323a,b).

10. Device for laying pipes according to claim 1, **characterised in that** the fastening head (1) comprises: a pivot joint (11) having a vertical axis (YY) formed by two portions (11a, 11b), one (11a) of which is fixedly joined to the fixing member (10) which is connected to the vehicle, the other is fixedly joined to the tilting joint (12), the tilting joint (12) is composed of two branches (121, 122) which are connected by means of a connection axle (123), which is horizontal (ZZ), the first branch (121) being fixedly joined to the second portion (11b) of the pivot joint (11), the second branch (122) being fixedly joined (1211, 1212) to the guide rail (2), these two branches being connected by means of a tilting actuator (125).

11. Device for laying pipes according to claim 10, **characterised in that** the first branch (121) is formed by two plates (120a) which are connected by the second portion (11b) of the pivot joint (11) and an axle (125a) which carries the actuator (125) and by the articulation axle (123), the second branch (122) is formed by two plates (122a) which are connected, on the one hand, to the axle (123) and, on the other hand, to an axle (125b) of the actuator (125), these two plates (122a) being fixed to the guide rail (2) through the telescopic pipe (30), leaving the free passage for the telescope-like movement of the pipe (30) of the carriage (3).

12. Device for laying pipes according to claim 1, **characterised in that** the telescopic pipe (30) accommodates an actuator (314) which rests on the rail (2) and which controls the movement of the carriage (3).

13. Device for laying pipes according to claim 1, **characterised in that** the end of the guide rail (2) carries a front camera (41) and the end of the telescopic pipe (30), at the inlet thereof which receives the guide rail (2), comprises an intermediate camera (42), the front camera (41) providing an image of the laid pipe (To) in order to align the guide rail (2) thereon, and the intermediate camera (42) providing an image of the curve (DTo) of the laid pipe (To) in order to control the engagement of the pipe (T) to be laid in the curve of the laid pipe (To).

14. Device for laying pipes according to claim 1, **characterised in that** the telescopic pipe (30) is provided with a support pole (6) at the opposite end thereof to the end which receives the guide rail (2), the pole (6) having a support (61) which is carried by two lateral bars (62) which are engaged in pairs of rollers (63) which are carried by the two sides of the telescopic pipe (30) and an actuator (65) which is installed on the telescopic pipe (30) and whose rod is connected to the support (61).

15. Device for laying pipes according to claim 1, **characterised in that** it comprises a device for geolocation of the guide rail (2) and the carriage (3) in order to locate and record the position of the pipe (T) to be laid at the end of its positioning operation and to enable the recording of the layout produced with the laid pipes and the function thereof.
